# EUROPEAN PATENT APPLICATION

(11) **EP 2 982 881 A1**
(43) Date of publication of application: **10.02.2016**
(21) Application number: 14779811.0
(22) Date of filing: 02.04.2014
(51) Int. Cl.: F16D 48/02, F16D 25/08

(54) **ADD-ON AUTOMATIC CLUTCH DEVICE**

(30) Priority: 02.04.2013 JP 2013077080
(71) Applicant: Osamu-Factory Co. Ltd., Kyoto 610-0313 (JP)
(72) Inventor: FUKUNAGA Osamu, Kyotanabe-city Kyoto 610 0313 (JP); TSUKUMA Ken, Kyotanabe-city Kyoto 610 0313 (JP); MORITA Yoshikazu, Kyotanabe-city Kyoto 610 0313 (JP)
(74) Representative: Handsome I.P. Ltd
(86) International application number: PCT/JP2014/059747
(87) International publication number: WO 2014/163111

(57) **Abstract**

This add-on automatic clutch device is to be added onto a vehicle having manual transmission and a clutch, and includes: a first hydraulic pipe having one end connected to a clutch master cylinder unit of the vehicle; a second hydraulic pipe having one end connected to a clutch release cylinder unit of the vehicle; a cylinder having a first port connected to the other end of the first hydraulic pipe and a second port connected to the other end of the second hydraulic pipe; a piston provided in the cylinder so as to be able to move back and forth; and a motor that generates drive power to cause the piston to move back and forth. A first port and a second port are disposed such that when the piston reaches the bottom dead center, oil can flow between the first hydraulic pipe and the second hydraulic pipe by the first port and the second port being connected through the cylinder.

## Description

### [Technical Field]

The present invention relates to an add-on automatic clutch device to be added on to a vehicle equipped with a manual transmission.

### [Background Art]

Automobiles transmit drive force from a drive source such an engine to wheels through a transmission. The transmission is broadly categorized into a manual transmission in which the gear position is changed by manual operation of a shift lever, and an automatic transmission in which the gear position is automatically changed in accordance with the vehicle speed or the engine speed of the engine.

In a vehicle equipped with a manual transmission (hereinafter referred to as "MT vehicle"), a clutch is interposed between the engine and the manual transmission. The clutch is engaged when the clutch pedal, disposed forward of the driver's seat, is not depressed. The clutch is disengaged when the clutch pedal is depressed. With the clutch engaged, the motive force of the engine is transmitted to the drive wheels while its speed is changed by the manual transmission. With the clutch disengaged, the gear position can be changed or the MT vehicle can be stopped. Here, so-called half clutch operation is needed to prevent an engine stall when the MT vehicle starts moving or to relax the shock caused by the difference in rotation between the engine and the transmission after the gear position is changed.

In contrast, a vehicle equipped with an automatic transmission (hereinafter referred to as "AT vehicle") does not require clutch operation and is therefore easier to drive than MT vehicles are. For this reason, the automobiles currently in the market are mostly AT vehicles, and MT vehicles are provided for only some vehicle models.

### [Citation List]

### [Patent Literatures]

[Patent Literature 1] Japanese Patent Application Publication No. 2007-223479
[Patent Literature 2] Japanese Patent Application Publication No. 2012-225432

### [Summary of Invention]

### [Technical Problems]

Meanwhile, MT vehicles are still popular among those who are into old-model vehicles and those who like to enjoy sports driving in circuits and the like. Unfortunately, an individual with a disability in the left leg or foot cannot operate the clutch pedal and therefore has to give up driving an old-model vehicle designed only as an MT vehicle and sports driving with an MT vehicle. Also, at present, when a married couple is planning to purchase an automobile for both of them to share, there are cases, for example, where the husband wants to drive an MT vehicle but the wife cannot drive an MT vehicle, and selecting an AT vehicle is therefore the only choice.

An object of the present invention is to provide an add-on automatic clutch device to be added on to a vehicle equipped with a manual transmission to thereby enable the vehicle to be used as both a two-pedal MT vehicle and a three-pedal MT vehicle.

### [Solution to Problems]

To achieve the above object, an add-on automatic clutch device according to the present invention is an add-on automatic clutch device to be added on to a vehicle equipped with a manual transmission and a clutch, including: a first hydraulic pipe having one end connected to a clutch master cylinder unit in the vehicle; a second hydraulic pipe having one end connected to a clutch release cylinder unit in the vehicle; a cylinder having a first port to which another end of the first hydraulic pipe is connected and a second port to which another end of the second hydraulic pipe is connected; a piston provided inside the cylinder in such a way as to be capable of reciprocating movement; and a motor configured to generate drive force for causing the reciprocating movement of the piston, in which the first port and the second port are disposed such that, when the piston is located at a bottom dead center, the first port and the second port communicate with each other through an inside of the cylinder and thereby enable oil to flow between the first hydraulic pipe and the second hydraulic pipe.

According to this structure, the first port and the second port communicate with each other through the inside of the cylinder when the piston is located at the bottom dead center. As a result, the clutch master cylinder unit and the clutch release cylinder unit communicate with each other through the first hydraulic pipe, the inside of the cylinder, and the second hydraulic pipe.

When the clutch pedal is depressed in this state, oil is pushed out of the clutch master cylinder unit into the first hydraulic pipe, oil flows from the first hydraulic pipe into the cylinder through the first port, oil flows out of the cylinder into the second hydraulic pipe through the second port, and oil flows from the second hydraulic pipe into the clutch release cylinder unit. As a result, the hydraulic pressure generated at the clutch master cylinder unit is transmitted to the clutch release cylinder unit and thereby raises the hydraulic pressure inside the clutch release cylinder unit, so that the clutch is completely disengaged (completely disengaged state). In this state, the gear position of the manual transmission can be changed.

When the amount of depression of the clutch pedal is then reduced (when the depression force inputted onto the clutch pedal is then weakened), oil returns from the first hydraulic pipe into the clutch master cylinder unit, oil flows out of the cylinder into the first hydraulic pipe through the first port, oil flows from the second hydraulic pipe into the cylinder through the second port, and oil flows out of the clutch release cylinder unit into the second hydraulic pipe, thereby lowering the hydraulic pressure inside the clutch release cylinder unit. As the hydraulic pressure inside the clutch release cylinder unit is lowered, the clutch accordingly shifts to a half clutch state. When the amount of depression of the clutch pedal then falls below a predetermined amount, the clutch is completely engaged (completely engaged state).

As described above, when the piston is located at the bottom dead center, the clutch can be disengaged and engaged by operating the clutch pedal. The vehicle can therefore be used as a three-pedal MT vehicle.

Meanwhile, when the piston is moved from the bottom dead center to the top dead center by the drive force of the motor, oil is pushed out of the cylinder into the second hydraulic pipe through the second port, and oil flows from the second hydraulic pipe into the clutch release cylinder unit. As a result, the hydraulic pressure generated at the cylinder is transmitted to the clutch release cylinder unit and thereby raises the hydraulic pressure inside the clutch release cylinder unit, so that the clutch shifts from the engaged state toward the disengaged state. When the piston reaches the top dead center, the clutch is completely disengaged (completely disengaged state). In this state, the gear position of the manual transmission can be changed.

When the piston is then moved from the top dead center to the bottom dead center by the drive force of the motor, oil returns from the second hydraulic pipe into the cylinder through the second port, and oil flows out of the clutch release cylinder unit into the second hydraulic pipe, thereby lowering the hydraulic pressure inside the clutch release cylinder unit. As the hydraulic pressure inside the clutch release cylinder unit is lowered, the clutch accordingly shifts to a half clutch state. When the piston reaches the bottom dead center, the clutch is completely engaged (completely engaged state).

As described above, the piston can be moved between the top dead center and the bottom dead center with the drive force of the motor. In this way, the clutch can be automatically disengaged and engaged without operating the clutch pedal. Thus, the vehicle can be used as a two-pedal MT vehicle.

Hence, by adding on the add-on automatic clutch device to a vehicle equipped with a manual transmission, that vehicle can be used as both a two-pedal MT vehicle and a three-pedal MT vehicle.

The add-on automatic clutch device may be such that it further includes an annular front-end-side seal member fitted on the piston and being in liquid-tight contact with an inner peripheral surface of the cylinder, and the front-end-side seal member is located on a base end side of the piston relative to the first port and the second port when the piston is located at the bottom dead center, and the front-end-side seal member is located between the first port and the second port when the piston is located at a top dead center.

According to this structure, when the piston is located at the bottom dead center, the front-end-side seal member is located on the base end side of the piston relative to the first port and the second port. Thus, the first port and the second port can communicate with each other through the inside of the cylinder. On the other hand, when the piston is located at the top dead center, the front-end-side seal member is located between the first port and the second port. Thus, the hydraulic-pressure transmission path between the clutch master cylinder unit and the clutch release cylinder unit (between the first hydraulic pipe and the second hydraulic pipe) is divided at the front-end-side seal member, thereby making it impossible to operate the clutch pedal.

The add-on automatic clutch device may be such that it further includes an annular base-end-side seal member fitted on the piston at a position on the base end side relative to the front-end-side seal member, and being in liquid-tight contact with the inner peripheral surface of the cylinder, and the base-end-side seal member is disposed to be located on the base end side relative to the first port irrespective of where the piston is located.

According to this structure, the base-end-side seal member can prevent the oil inside the cylinder from leaking out of the cylinder, irrespective of where the piston is located.

The add-on automatic clutch device may be such that it further includes an annular cylinder-side seal member fitted in the cylinder at a position on the base end side of the piston relative to the first port, and being in liquid-tight contact with a peripheral surface of the piston, and the cylinder-side seal member is disposed to be located on the base end side relative to the front-end-side seal member irrespective of where the piston is located.

According to this structure, the cylinder-side seal member can prevent the oil inside the cylinder from leaking out of the cylinder, irrespective of where the piston is located.

The add-on automatic clutch device preferably further includes an eccentric cam configured to convert rotation by drive force of the motor into the reciprocating movement of the piston.

According to this structure, the position of the piston at the bottom dead center and the top dead center can be stably maintained.

The add-on automatic clutch device preferably further includes: a switch provided to a shift knob in the vehicle and configured to be operated to instruct automatic operation of the clutch; and a motor controlling unit for controlling the motor in response to pressing operation of the switch to thereby move the piston from the bottom dead center to a top dead center and then move the piston from the top dead center to the bottom dead center based on operation of a gas pedal in the vehicle.

According to this configuration, in response to the pressing operation of the switch, the motor is controlled such that the piston is moved from the bottom dead center to the top dead center. Thus, the clutch is automatically disengaged and the gear position of the manual transmission can be changed. When the gas pedal is then operated, the motor is controlled based on this operation such that the piston is moved from the top dead center to the bottom dead center. Thus, the clutch is automatically engaged.

Hence, the clutch operation can be automatically performed only by the pressing operation of the switch. As a result, an individual with a disability in the left leg or foot can also enjoy driving an old-model vehicle designed only as an MT vehicle and sports driving with an MT vehicle. Moreover, a married couple can select an MT vehicle as an automobile for both of them to share even if the husband or the wife cannot drive an MT vehicle.

### [Advantageous Effects of Invention]

According to the present invention, by adding on the add-on automatic clutch device to a vehicle equipped with a manual transmission, that vehicle can be used as both a two-pedal MT vehicle and a three-pedal MT vehicle. As a result, an individual with a disability in the left leg or foot can also enjoy driving an old-model vehicle designed only as an MT vehicle and sports driving with an MT vehicle. Moreover, a married couple can select an MT vehicle as an automobile for both of them to share even if the husband or the wife cannot drive an MT vehicle.

### [Brief Description of Drawings]

[Fig. 1] Fig. 1 is a diagram schematically showing the configuration of a main section of a vehicle equipped with an add-on automatic clutch device according to an embodiment of the present invention.
[Fig. 2] Fig. 2 is a view showing the exterior of a hydraulic-pressure generation unit.
[Fig. 3] Fig. 3 is a cross-sectional view of the hydraulic-pressure generation unit taken along line A-A shown in Fig. 2.
[Fig. 4] Fig. 4 is a cross-sectional view of the hydraulic-pressure generation unit taken along line B-B shown in Fig. 3 and shows a state where a piston therein is located at its bottom dead center.
[Fig. 5] Fig. 5 is a cross-sectional view of the hydraulic-pressure generation unit taken along line B-B shown in Fig. 3 and shows a state where the piston is located at its top dead center.
[Fig. 6] Fig. 6 is a block diagram showing the configuration of a control unit.
[Fig. 7] Fig. 7 is a cross-sectional view of a hydraulic-pressure generation unit according to a second embodiment of the present invention and shows a state where a piston therein is located at its bottom dead center.
[Fig. 8] Fig. 8 is a cross-sectional view of the hydraulic-pressure generation unit according to the second embodiment of the present invention and shows a state where the piston is located at its top dead center.

### [Description of Embodiments]

Embodiments of the present invention will be described below in detail with reference to the accompanying drawings.

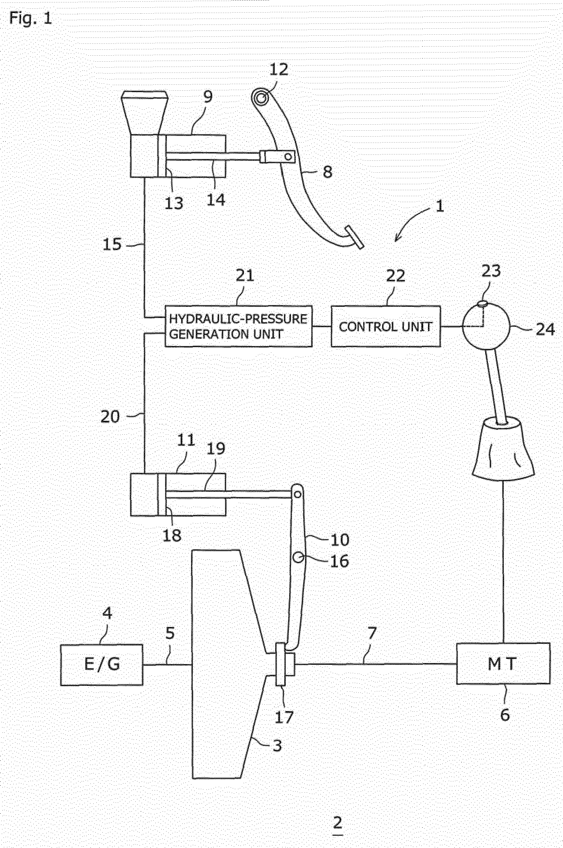

Fig. 1 is a diagram schematically showing the configuration of a main section of a vehicle equipped with an add-on automatic clutch device according to an embodiment of the present invention.

An add-on automatic clutch device 1 is a device to be added on to an MT vehicle 2 to automate the operation of a clutch 3 of the MT vehicle 2.

The clutch 3 is interposed between a crankshaft 5 of an engine (E/G) 4 and an input shaft 7 of a manual transmission (MT) 6. The clutch 3 is, for example, a dry clutch, which has been widely employed in MT vehicles.

For the operation of the clutch 3, the MT vehicle 2 includes a clutch pedal 8, a clutch master cylinder unit 9, a release fork 10, and a clutch release cylinder unit 11.

The clutch pedal 8 is disposed forward of the driver's seat of the MT vehicle 2 and configured to be operated by the foot (left foot) of the driver seated on the driver's seat. The clutch pedal 8 is provided swingably about a swing shaft 12.

The clutch master cylinder unit 9 is disposed forward of the clutch pedal 8. A piston 13 in the clutch master cylinder unit 9 is coupled to the clutch pedal 8 by a rod 14. Also, one end of a first hydraulic pipe 15 is connected to the clutch master cylinder unit 9.

When the driver's foot depresses the clutch pedal 8, the piston 13 of the master cylinder 9 moves forward with the rod 14, thereby pushing oil (clutch fluid) out of the clutch master cylinder unit 9 into the first hydraulic pipe 15. A pedal return spring (not shown) is connected to the clutch pedal 8. As the driver's foot is released from the clutch pedal 8, the clutch pedal 8 returns toward the driver's seat with the elastic force of the pedal return spring. The piston 13 of the master cylinder 9 accordingly moves backward with the rod 14, thereby drawing oil from the first hydraulic pipe 15 into the clutch master cylinder unit 9.

The release fork 10 is provided swingably about a swing shaft 16 serving as a fulcrum, the swing shaft 16 extending in a lateral direction perpendicular to the crankshaft 5 and the input shaft 7. One end portion of the release fork 10 is connected to a release bearing 17 on the clutch 3.

A piston 18 in the clutch release cylinder unit 11 is coupled to the other end portion of the release fork 10 by a rod 19. Also, one end of a second hydraulic pipe 20 is connected to the clutch release cylinder unit 11.

As oil flows into the clutch release cylinder unit 11 from the second hydraulic pipe 20, the resultant hydraulic pressure moves the piston 18 of the clutch release cylinder unit 11 toward the release fork 10. The release fork 10 accordingly turns such that the one end portion thereof moves toward the crankshaft 5. As a result, the release bearing 17 of the clutch 3 moves toward the crankshaft 5, so that the clutch 3 shifts from an engaged state to a disengaged state. On the other hand, as oil is drawn from the clutch release cylinder unit 11 into the second hydraulic pipe 19, the piston 18 of the clutch release cylinder unit 11 moves away from the release fork 10. The release fork 10 accordingly turns such that the one end portion thereof moves toward the input shaft 7. As a result, the release bearing 17 moves toward the input shaft 7, so that the clutch 3 shifts from the disengaged state to the engaged state.

The first hydraulic pipe 15 and the second hydraulic pipe 20 are not separated from each other and form a single hydraulic pipe before the add-on automatic clutch device 1 is mounted to the MT vehicle 2.

The add-on automatic clutch device 1 includes a hydraulic-pressure generation unit 21, a control unit 22, and a clutch trigger button 23.

When the add-on automatic clutch device 1 is added on to the MT vehicle 2, the single hydraulic pipe is divided into the first hydraulic pipe 15 and the second hydraulic pipe 20 and the hydraulic-pressure generation unit 21 is interposed between the first hydraulic pipe 15 and the second hydraulic pipe 20. The control unit 22 is configured to control the operation of the hydraulic-pressure generation unit 21. A signal from the clutch trigger button 23 is inputted into the control unit 22. The clutch trigger button 23 is disposed at a position where the driver can operate it with his or her hand, for example, on a shift knob 24.

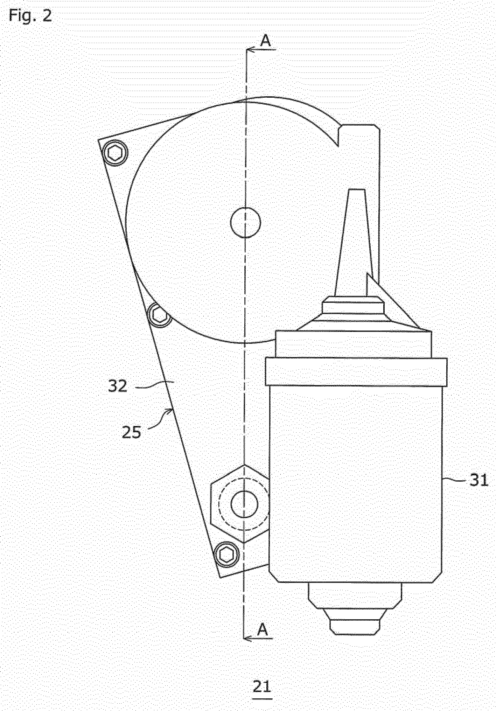

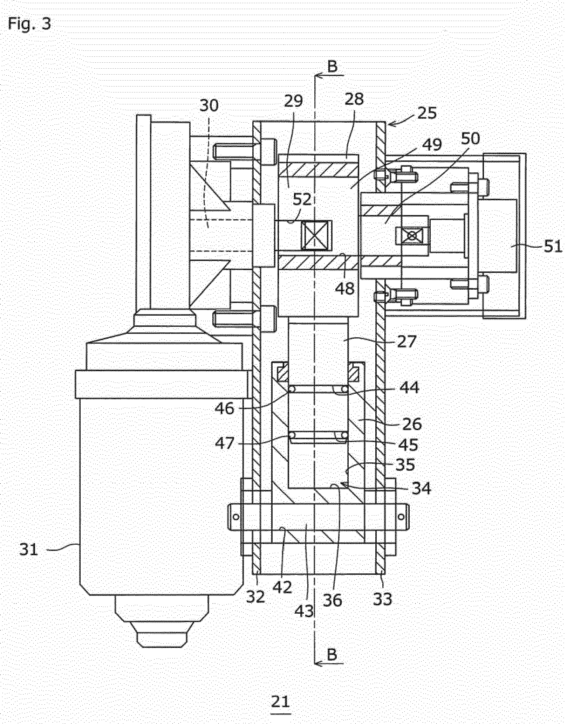

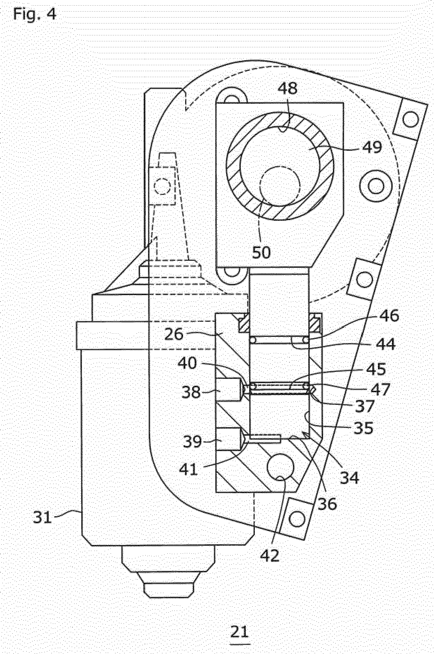

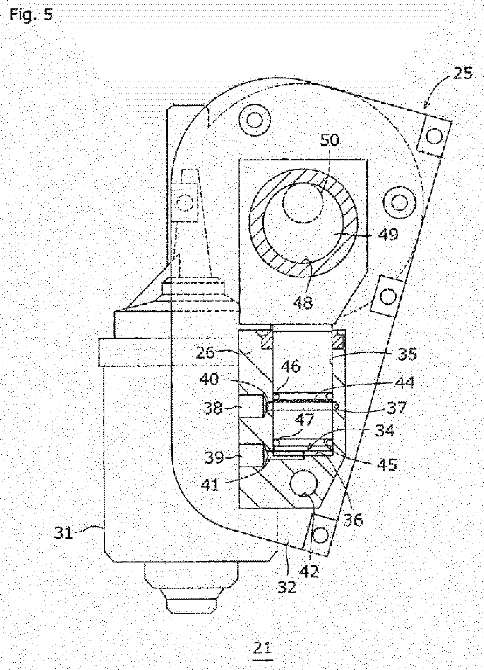

Fig. 2 is a view showing the exterior of the hydraulic-pressure generation unit. Fig. 3 is a cross-sectional view of the hydraulic-pressure generation unit taken along line A-A shown in Fig. 2. Fig. 4 is a cross-sectional view of the hydraulic-pressure generation unit taken along line B-B shown in Fig. 3 and shows a state where a piston therein is located at its bottom dead center. Fig. 5 is a cross-sectional view of the hydraulic-pressure generation unit taken along line B-B shown in Fig. 3 and shows a state where the piston is located at its top dead center.

As shown in Fig. 3, the hydraulic-pressure generation unit 21 includes a base 25, a cylinder 26, a piston 27, a cam receiver 28, an eccentric cam 29, a drive shaft 30, and a motor 31.

The base 25 includes a motor-side base plate 32 and a potentiometer-side base plate 33 as a pair of substantially rectangular plates disposed to face each other. The cylinder 26, the piston 27, the cam receiver 28, and the eccentric cam 29 are disposed between the motor-side base plate 32 and the potentiometer-side base plate 33.

The cylinder 26 has a cuboidal outer shape. A cavity 34 is formed inside the cylinder 26. The cavity 34 is bored from one surface, in the longitudinal direction, of the cylinder 26 and includes an inner peripheral surface 35 having a cylindrical shape and having one end open to the one surface of the cylinder 26, and a bottom surface 36 closing the other end of the inner peripheral surface 35. As shown in Figs. 4 and 5, a groove 37 having a V cross-sectional shape is formed in the inner peripheral surface 35 over the entire periphery at a middle portion thereof in the direction of the center axis.

A first port 38 and a second port 39 are provided in one side surface of the cylinder 26. The first port 38 is disposed at a position where it faces the groove 37 in the radial direction (bore direction) of the cavity 34. The second port 39 is disposed at a position where it faces the bottom surface 36 of the cavity 34 in the radial direction of the cavity 34. The first port 38 and the second port 39 include a first connection passage 40 and a second connection passage 41, respectively, which extend toward the cavity 34. The first connection passage 40 and the second connection passage 41 are connected to the groove 37 and a bottom portion of the inner peripheral surface 35 of the cavity 34, respectively. Thus, the first port 38 and the second port 39 are in communication with the cavity 34. The first hydraulic pipe 15 and the second hydraulic pipe 20 (see Fig. 1) are connected to the first port 38 and the second port 39, respectively.

Also, a bearing hole 42 is formed in an end portion of the cylinder 26 around the other surface thereof in the longitudinal direction, penetrating therethrough in the direction in which the motor-side base plate 32 and the potentiometer-side base plate 33 opposed to each other. As shown in Fig. 3, a cylinder shaft 43 is inserted through the bearing hole 42. One end portion and the other end portion of the cylinder shaft 43 are supported on the motor-side base plate 32 and the potentiometer-side base plate 33, respectively. Thus, the cylinder 26 is held between the motor-side base plate 32 and the potentiometer-side base plate 33 swingably about the cylinder shaft 43.

The piston 27 is in the shape of a substantially circular cylinder having an outer diameter slightly smaller than the diameter (bore) of the inner peripheral surface 35 of the cavity 34. The piston 27 is movably inserted in the cavity 34. A first seal groove 44 and a second seal groove 45 are formed in the piston 27 over the entire periphery at a middle portion and a front end portion thereof in the direction of the center axis, respectively. A base-end-side seal member 46 and a front-end-side seal member 47, each of which is an O-ring, are fitted on the first seal groove 44 and the second seal groove 45, respectively. The base-end-side seal member 46 and the front-end-side seal member 47 are in liquid-tight contact with the inner peripheral surface 35 of the cavity 34.

As shown in Fig. 4, when the piston 27 is located at its bottom dead center, the front-end-side seal member 47 is located on the base end side of the piston 27 relative to the first port 38 (first connection passage 40) and the second port 39 (second connection passage 41). Hence, the first port 38 and the second port 39 face a portion of the cavity 34 on the front end side of the piston 27 relative to the front-end-side seal member 47 and communicate with each other through this portion.

As shown in Fig. 5, when the piston 27 is located at its top dead center, the base-end-side seal member 46 is located on the base end side of the piston 27 relative to the first port 38 while the front-end-side seal member 47 is located between the first port 38 and the second port 39. Hence, the first port 38 faces a portion between the base-end-side seal member 46 and the front-end-side seal member 47 while the second port 39 faces a portion of the cavity 34 on the front end side of the piston 27 relative to the front-end-side seal member 47.

The cam receiver 28 is connected to a based end portion of the piston 27. The cam receiver 28 has a substantially cuboidal shape. A cam holding hole 48 including a peripheral surface in a cylindrical shape is formed in the cam receiver 28, penetrating therethrough in the direction in which the motor-side base plate 32 and the potentiometer-side base plate 33 face each other.

The eccentric cam 29 includes a cam body section 49 and a shaft section 50. The cam body section 49 is in the shape of a substantially circular cylinder having an outer diameter slightly smaller than the cam holding hole 48. The cam body section 49 is housed in the cam holding hole 48 of the cam receiver 28. The shaft section 50 is formed in the shape of a substantially circular cylinder protruding from one end surface of the cam body section 49 toward the potentiometer-side base plate 33. A front end portion of the shaft section 50 extends outward penetrating through the potentiometer-side base plate 33 and is rotatably held in a bearing member 51 attached to the outer surface of the potentiometer-side base plate 33. Moreover, the center of the shaft section 50 is disposed at a position off the center of the cam body section 49. Further, a connection hole 52 is formed as a recess in the shape of a circular cylinder in the other end surface of the cam body section 49 coaxially with the shaft section 50.

The drive shaft 30 penetrates through the motor-side base plate 32. One end portion of the drive shaft 30 is inserted in the connection hole 52 of the cam body section 49 such that the one end portion cannot rotate relative to the eccentric cam 29.

The motor 31 is attached to the outer surface of the motor-side base plate 32. The drive force of the motor 31 is inputted into the drive shaft 30.

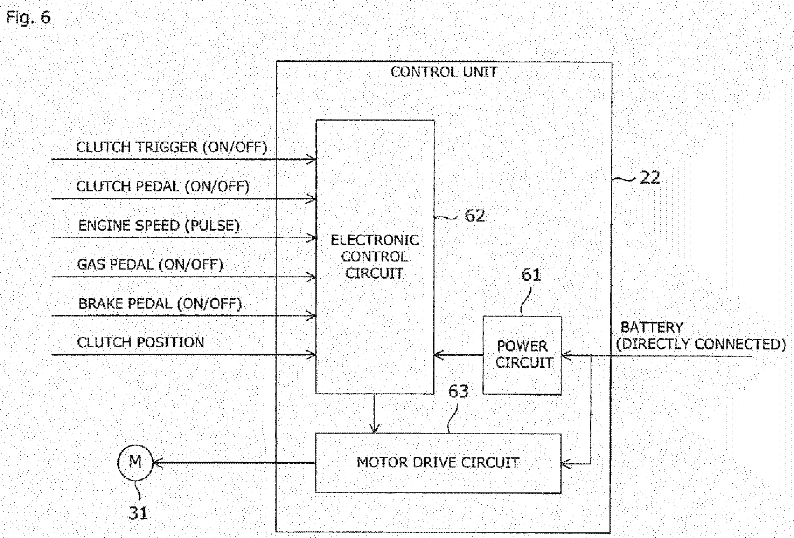

Fig. 6 is a block diagram showing the configuration of the control unit.

The control unit 22 includes a power circuit 61, an electronic control circuit 62, and a motor drive circuit 63.

The power circuit 61 is configured to convert a voltage (e.g. 12 V) supplied from a battery (not shown) installed on the MT vehicle 2 into a predetermined voltage (e.g. 5 V) and supply that voltage as an operation voltage to the electronic control circuit 62.

An ON/OFF signal from the clutch trigger button 23 is inputted into the electronic control circuit 62.

Specifically, an ON signal is inputted from the clutch trigger button 23 into the electronic control circuit 62 when the driver's finger presses the clutch trigger button 23. The signal inputted from the clutch trigger button 23 into the electronic control circuit 62 switches from the ON signal to an OFF signal when the finger is released from the clutch trigger button 23.

Also, ON/OFF signals from a clutch pedal switch, a gas pedal switch, and a brake pedal switch (neither is shown) are inputted into the electronic control circuit 62.

The clutch pedal switch is formed, for example, by a microswitch. An ON signal is inputted from the clutch pedal switch into the electronic control circuit 62 when the driver's foot depresses the clutch pedal 8. The signal inputted from the clutch pedal switch into the electronic control circuit 62 switches from the ON signal to an OFF signal when the foot is released from the clutch pedal 8.

The gas pedal switch is formed, for example, by a microswitch. An ON signal is inputted from the gas pedal switch into the electronic control circuit 62 when the driver's foot depresses the gas pedal, which is provided in the MT vehicle 2. The signal inputted from the gas pedal switch into the electronic control circuit 62 switches from the ON signal to an OFF signal when the foot is released from the gas pedal 8.

The brake pedal switch is formed, for example, by a microswitch. An ON signal is inputted from the brake pedal switch into the electronic control circuit 62 when the driver's foot depresses the brake pedal, which is provided in the MT vehicle 2. The signal inputted from the brake pedal switch into the electronic control circuit 62 switches from the ON signal to an OFF signal when the foot is released from the brake pedal 8.

Further, signals from a clutch position sensor and an engine speed sensor (neither is shown) are inputted into the electronic control circuit 62.

The clutch position sensor is configured to output an ON signal when the piston 27 is located at a predetermined position.

The engine speed sensor is configured to output a pulse signal in synchronization with the rotation of the crankshaft 5 of the engine 4.

The electronic control circuit 62 is configured to output a control signal for controlling the drive of the motor 31 to the motor drive circuit 63 based on the signals inputted from the clutch trigger button 23, the clutch pedal switch, the gas pedal switch, the brake pedal switch, the engine speed sensor, and the clutch position sensor. Moreover, the electronic control circuit 62 is configured to detect the position of the piston 27 based on the signal inputted from the clutch position sensor and the control signal outputted to the motor drive circuit 63.

The motor drive circuit 63 includes, for example, an inverter circuit or the like. The drive of the motor 31 is controlled by turning on and off a switching element included in the inverter circuit based on the control signal inputted from the electronic control circuit 62 into the motor drive circuit 63 and supplying the resultant drive current from the motor drive circuit 63 to the motor 31.

Without the clutch trigger button 23 pressed, the piston 27 is located at the bottom dead center and the motor 31 is not driven. With the piston 27 located at the bottom dead center, the first port 38 and the second port 39 are in communication with each other through the cavity 34 of the cylinder 26, as mentioned above. Hence, the clutch master cylinder unit 9 and the clutch release cylinder unit 11 are in communication with each other through the first hydraulic pipe 15, the cavity 34, and the second hydraulic pipe 20.

When the clutch pedal 8 is depressed in this state, oil is pushed out of the clutch master cylinder unit 9 into the first hydraulic pipe 15 and oil flows from the second hydraulic pipe 20 into the clutch release cylinder unit 11. As a result, the hydraulic pressure generated at the clutch master cylinder unit 9 is transmitted to the clutch release cylinder unit 11 and thereby raises the hydraulic pressure inside the clutch release cylinder unit 11, so that the clutch 3 is completely disengaged (completely disengaged state). In this state, the gear position of the manual transmission 6 can be changed.

When the amount of depression of the clutch pedal 8 is reduced (when the depression force inputted onto the clutch pedal 8 is weakened) after the shift knob 24 (shift lever) is operated to change the gear position of the manual transmission 6, oil returns from the first hydraulic pipe 15 into the clutch master cylinder unit 9 and oil flows out of the clutch release cylinder unit 11 into the second hydraulic pipe 20, thereby lowering the hydraulic pressure inside the clutch release cylinder unit 11. As the hydraulic pressure inside the clutch release cylinder unit 11 is lowered, the clutch 3 accordingly shifts to a half clutch state. When the amount of depression of the clutch pedal 8 then falls below a predetermined amount, the clutch 3 is completely engaged (completely engaged state).

As described above, when the piston 27 is located at the bottom dead center, the clutch 3 can be disengaged and engaged by operating the clutch pedal 8 and the vehicle 2 can therefore be used as a three-pedal MT vehicle.

When the driver's hand presses (clicks) the clutch trigger button 23, the electronic control circuit 62 inputs, into the motor drive circuit 63, a control signal for controlling the drive of the motor 31 so as to move the piston 27 from the bottom dead center to the top dead center. In response, the motor drive circuit 63 supplies a drive current to the motor 31, thereby driving the motor 31. The drive force of the motor 31 is then inputted into the drive shaft 30, and that drive force rotates the eccentric cam 29 such that the piston 27 moves from the bottom dead center to the top dead center.

As the piston 27 moves from the bottom dead center toward the top dead center, oil is accordingly pushed out of the cylinder 26 into the second hydraulic pipe 20 and oil accordingly flows from the second hydraulic pipe 20 into the clutch release cylinder unit 11. As a result, the hydraulic pressure generated at the cylinder 26 is transmitted to the clutch release cylinder unit 11 and thereby raises the hydraulic pressure inside the clutch release cylinder unit 11, so that the clutch 3 shifts from the engaged state toward the disengaged state. When the eccentric cam 29 rotates 180° and the piston 27 reaches the top dead center, the clutch 3 is completely disengaged (completely disengaged state). In this state, the gear position of the manual transmission 6 can be changed.

When the driver' foot then depresses the gas pedal, thereby inputting an ON signal from the gas pedal sensor into the electronic control circuit 62, the electronic control circuit 62 determines that the operation of the shift knob 24 (shift lever) for changing the gear position of the manual transmission 6 has been completed. The electronic control circuit 62 then inputs, into the motor drive circuit 63, a control signal for controlling the drive of the motor 31 so as to move the piston 27 from the top dead center to the bottom dead center. In response, the motor drive circuit 63 supplies a drive current to the motor 31, thereby driving the motor 31. The drive force of the motor 31 is then inputted into the drive shaft 30 and that drive force rotates the eccentric cam 29 such that the piston 27 moves from the top dead center to the bottom dead center.

Meanwhile, when the driver's foot depresses the brake pedal, thereby inputting an ON signal from the brake pedal sensor into the electronic control circuit 62, the electronic control circuit 62 refers to the engine speed of the engine 4. When the engine speed of the engine 4 falls to or below a predetermined rotational speed, the electronic control circuit 62 determines that the vehicle 2 is stopping. In this case, the motor 31 is maintained stopped and the clutch 3 is kept disengaged. In this way, the MT vehicle 2 can be stopped without an engine stall.

When the driver's foot is then released from the brake pedal and depresses the gas pedal, the electronic control circuit 62 determines that the MT vehicle 2 is starting to move. The electronic control circuit 62 then inputs, into the motor drive circuit 63, a control signal for controlling the drive of the motor 31 so as to move the piston 27 from the top dead center to the bottom dead center. In response, the motor drive circuit 63 supplies a drive current to the motor 31, thereby driving the motor 31. The drive force of the motor 31 is then inputted into the drive shaft 30 and that drive force rotates the eccentric cam 29 such that the piston 27 moves from the top dead center to the bottom dead center.

As the piston 27 moves from the top dead center to the bottom dead center, oil returns from the second hydraulic pipe 20 into the cylinder 26 and oil flows out of the clutch release cylinder unit 11 into the second hydraulic pipe 20, thereby lowering the hydraulic pressure inside the clutch release cylinder unit 11. As the hydraulic pressure inside the clutch release cylinder unit 11 is lowered, the clutch 3 accordingly shifts to a half clutch state. When the eccentric cam 29 then rotates 180° and the piston 27 reaches the bottom dead center, the clutch 3 is completely engaged (completely engaged state).

As described above, the clutch 3 is automatically disengaged and engaged by the piston 27 moved between the bottom dead center and the top dead center with the drive force of the motor 31 in accordance with the operation of the shift knob 24, the gas pedal, and the brake pedal. Hence, the MT vehicle 2 can be used as a two-pedal MT vehicle which does not require operating the clutch pedal 8.

When the piston 27 is slightly moved from the bottom dead center toward the top dead center, the front-end-side seal member 47 is located between the first port 38 and the second port 39, and the first port 38 faces a portion of the inside of the cylinder 26 between the base-end-side seal member 46 and the front-end-side seal member 47 while the second port 39 faces a portion of the inside of the cylinder 26 on the front end side of the piston 27 relative to the front-end-side seal member 47. As a result, the hydraulic-pressure transmission path between the clutch master cylinder unit 9 and the clutch release cylinder unit 11 is divided at the front-end-side seal member 47. Hence, the hydraulic pressure inside the clutch release cylinder unit 11 can be controlled through the reciprocating movement of the piston 27 by means of the drive force of the motor 31, independently of the operation of the clutch pedal 8. Hence, the hydraulic pressure inside the clutch release cylinder unit 11 can be controlled through the reciprocating movement of the piston 27 by means of the drive force of the motor 31, independently of the operation of the clutch pedal 8.

As described above, by adding on the add-on automatic clutch device 1 to the vehicle 2 equipped with the manual transmission 6, the vehicle can be used as both a two-pedal MT vehicle and a three-pedal MT vehicle.

Moreover, the position of the piston 27 at the bottom dead center and the top dead center can be stably maintained since the eccentric cam 29 is employed to convert the rotation by the drive force of the motor 31 into the reciprocating movement of the piston 27.

Furthermore, in response to the pressing operation of the clutch trigger button 23, the motor 31 is controlled such that the piston 27 is moved from the bottom dead center to the top dead center. Thus, the clutch 3 is automatically disengaged and the gear position of the manual transmission 6 can be changed. When the gas pedal is then operated, the motor 31 is controlled based on this operation such that the piston 27 is moved from the top dead center to the bottom dead center. Thus, the clutch 3 is automatically engaged.

Hence, the clutch operation can be automatically performed only by the pressing operation of the clutch trigger button 23. As a result, an individual with a disability in the left leg or foot can also enjoy driving an old-model vehicle designed only as an MT vehicle and sports driving with an MT vehicle. Moreover, a married couple can select an MT vehicle as an automobile for both of them to share even if the husband or the wife cannot drive an MT vehicle.

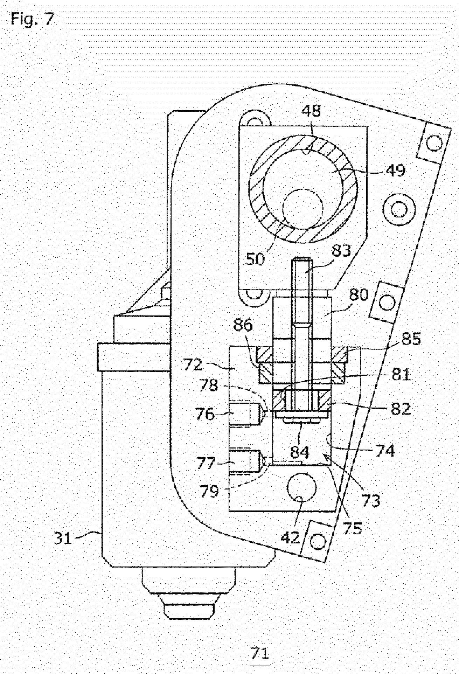

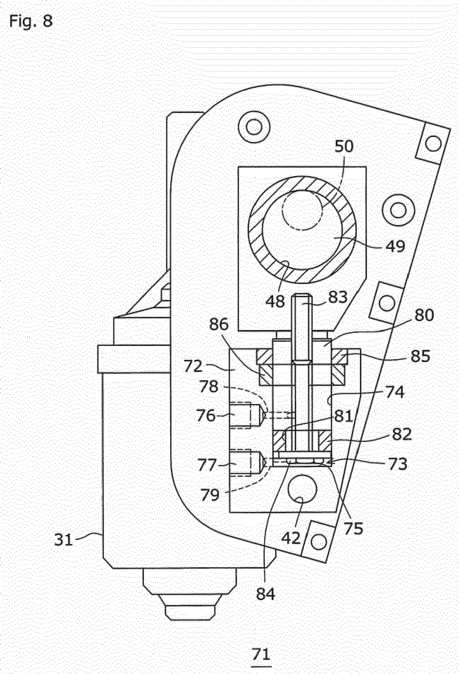

Fig. 7 is a cross-sectional view of a hydraulic-pressure generation unit according to a second embodiment of the present invention and shows a state where a piston therein is located at its bottom dead center. Fig. 8 is a cross-sectional view of the hydraulic-pressure generation unit according to the second embodiment of the present invention and shows a state where the piston is located at its top dead center. In Figs. 7 and 8, portions equivalent to the portions shown in Figs. 4 and 5 are denoted by the same reference signs as these portions. Description of the portions denoted by the same reference signs is omitted below.

A cylinder 72 in a hydraulic-pressure generation unit 71 has a cuboidal outer shape. A cavity 73 is formed inside the cylinder 72. The cavity 73 is bored from one surface, in the longitudinal direction, of the cylinder 72 and includes an inner peripheral surface 74 having a cylindrical shape and having one end open to the one surface of the cylinder 72, and a bottom surface 75 closing the other end of the inner peripheral surface 74.

A first port 76 and a second port 77 are provided in one side surface of the cylinder 72. The first port 76 is disposed at a position where it faces a middle portion, in the direction of the center axis, of the cavity 73 in the radial direction (bore direction) of the cavity 73. The second port 77 is disposed at a position where it faces the bottom surface 75 of the cavity 73 in the radial direction of the cavity 73. The first port 76 and the second port 77 include a first connection passage 78 and a second connection passage 79, respectively, which extend toward the cavity 73. The front ends of the first connection passage 78 and the second connection passage 79 are open to the inner peripheral surface 74 of the cavity 73. Thus, the first port 76 and the second port 77 are in communication with the cavity 73. A first hydraulic pipe 15 and a second hydraulic pipe 20 (see Fig. 1) are connected to the first port 76 and the second port 77, respectively.

A piston 80 in the hydraulic-pressure generation unit 71 is in the shape of a substantially circular cylinder having an outer diameter slightly smaller than the diameter (bore) of the inner peripheral surface 74 of the cavity 73. The piston 80 is movably inserted in the cavity 73. An annular groove 81 is formed in a front end portion of the piston 80 over the entire periphery. An annular front-end-side seal member 82 is fitted on the annular groove 81. Moreover, a shaft 83 is disposed inside the piston 80 along the center axis thereof. A threaded hole is formed in a front end portion of the shaft 83, and a bolt 84 screwed in this threaded hole holds the front-end-side seal member 82 to prevent it from falling from the annular groove 81. The front-end-side seal member 82 is in liquid-tight contact with the inner peripheral surface 74 of the cavity 73.

An annular lip seal 85 is fitted in an end portion of the inner peripheral surface 74 of the cylinder 72 on the base end side of the piston 80 (an end portion of the inner peripheral surface 74 on the open end side thereof) . Moreover, an annular cylinder-side seal member 86 is fitted in the inner peripheral surface 74 adjacently to the lip seal 85. The lip seal 85 and the cylinder-side seal member 86 are in liquid-tight contact with the peripheral surface of the piston 80. As a result, oil is prevented from leaking out from between the inner peripheral surface 74 of the cylinder 72 and the piston 80.

As shown in Fig. 7, when the piston 80 is located at its bottom dead center, the front-end-side seal member 82 is located on the base end side of the piston 80 relative to the first port 76 (first connection passage 78) and the second port 77 (second connection passage 79). Thus, the first port 76 and the second port 38 face a portion of the cavity 73 on the front end side of the piston 80 relative to the front-end-side seal member 82 and communicate with each other through this portion.

As shown in Fig. 8, when the piston 80 is located at its top dead center, the front-end-side seal member 82 is located between the first port 76 and the second port 77. Hence, the first port 76 faces a portion of the cavity 73 between the front-end-side seal member 82 and the cylinder-side seal member 86 while the second port 77 faces a portion of the cavity 73 on the front end side of the piston 80 relative to the front-end-side seal member 82.

The structure shown in Fig. 7 and 8 can bring out advantageous effects similar to those by the structure shown in Figs. 4 and 5.

Although the two embodiments of the present invention have been described above, the present invention can be carried out in other ways as well.

For example, the above embodiments employ the structure using the eccentric cam 29 to convert the rotational movement of the motor 31 into the linearly reciprocating movement of the piston 27 or the piston 62, but the eccentric cam 29 does not necessarily have to be used. For example, a structure may be employed in which the drive shaft 30 and the motor 31 are omitted and the piston 27 or the piston 62 is linearly moved with the drive force of a linear motor.

Various other design changes can be made to the above structure within the scope of the matters described in the claims.

### [Reference Signs List]

- 1: add-on automatic clutch device
- 2: MT vehicle (vehicle)
- 3: clutch
- 9: clutch master cylinder unit
- 11: clutch release cylinder unit
- 15: first hydraulic pipe
- 20: second hydraulic pipe
- 22: control unit (motor controlling unit)
- 23: clutch trigger button (switch)
- 26: cylinder
- 27: piston
- 29: eccentric cam
- 31: motor
- 38: first port
- 39: second port
- 46: base-end-side seal member
- 47: front-end-side seal member
- 72: cylinder
- 76: first port
- 77: second port
- 80: piston
- 82: front-end-side seal member
- 86: cylinder-side seal member

## Claims

1. An add-on automatic clutch device to be added on to a vehicle equipped with a manual transmission and a clutch, comprising:
a first hydraulic pipe having one end connected to a clutch master cylinder unit in the vehicle;
a second hydraulic pipe having one end connected to a clutch release cylinder unit in the vehicle;
a cylinder having a first port to which another end of the first hydraulic pipe is connected and a second port to which another end of the second hydraulic pipe is connected;
a piston provided inside the cylinder in such a way as to be capable of reciprocating movement; and
a motor configured to generate drive force for causing the reciprocating movement of the piston, wherein
the first port and the second port are disposed such that, when the piston is located at a bottom dead center, the first port and the second port communicate with each other through an inside of the cylinder and thereby enable oil to flow between the first hydraulic pipe and the second hydraulic pipe.

2. The add-on automatic clutch device according to claim 1, further comprising an annular front-end-side seal member fitted on the piston and being in liquid-tight contact with an inner peripheral surface of the cylinder, wherein
the front-end-side seal member is located on a base end side of the piston relative to the first port and the second port when the piston is located at the bottom dead center, and the front-end-side seal member is located between the first port and the second port when the piston is located at a top dead center.

3. The add-on automatic clutch device according to claim 2, further comprising an annular base-end-side seal member fitted on the piston at a position on the base end side relative to the front-end-side seal member, and being in liquid-tight contact with the inner peripheral surface of the cylinder, wherein
the base-end-side seal member is disposed to be located on the base end side relative to the first port irrespective of where the piston is located.

4. The add-on automatic clutch device according to claim 2, further comprising an annular cylinder-side seal member fitted in the cylinder at a position on the base end side of the piston relative to the first port, and being in liquid-tight contact with a peripheral surface of the piston, wherein
the cylinder-side seal member is disposed to be located on the base end side relative to the front-end-side seal member irrespective of where the piston is located.

5. The add-on automatic clutch device according to claim 1, further comprising an eccentric cam configured to convert rotation by drive force of the motor into the reciprocating movement of the piston.

6. The add-on automatic clutch device according to claim 1, further comprising:
a switch provided to a shift knob in the vehicle and configured to be operated to instruct automatic operation of the clutch; and
a motor controlling unit for controlling the motor in response to pressing operation of the switch to thereby move the piston from the bottom dead center to a top dead center and then move the piston from the top dead center to the bottom dead center based on operation of a gas pedal in the vehicle.
